# FASCICULE DE BREVET EUROPEEN

(11) **EP 4 217 599 B1**
(45) Date de publication et mention de la délivrance du brevet: **10.09.2025**
(21) Numéro de dépôt: 21790955.5
(22) Date de dépôt: 22.09.2021
(51) Int. Cl.: F02K 3/115, F02C 7/14, F28D 1/04

(54) **ÉCHANGEUR DE CHALEUR DOUBLE FLUX**
DOPPELFLUSS-WÄRMETAUSCHER
DOUBLE-FLOW HEAT EXCHANGER

(30) Priorité: 23.09.2020 FR 2009669
(43) Date de publication de la demande: 02.08.2023
(73) Titulaire: SAFRAN, 75015 Paris (FR)
(72) Inventeur: TOUBIANA, Ephraïm, 77550 MOISSY-CRAMAYEL (FR); MAALOUF, Samer, 77550 MOISSY-CRAMAYEL (FR)
(74) Mandataire: Gevers & Orès
(86) Numéro de dépôt international: PCT/FR2021/051621
(87) Numéro de publication internationale: WO 2022/064136

(56) Documents cités:
- EP-A1- 3 196 443
- US-A- 3 792 584
- US-A1- 2020 248 620
- US-A1- 2020 332 718

## Description

### Domaine de l'invention

La présente invention concerne le domaine général de l'aéronautique. Elle vise en particulier un échangeur de chaleur pour une turbomachine.

### Arrière-plan technique

L'art antérieur comprend le document EP-A1-3 196 443.

Une turbomachine, notamment d'aéronef, comprend divers organes et/ou équipements devant être lubrifiés et/ou refroidis tels que des paliers à roulements et engrenages. La chaleur dégagée par ces composants qui peut être très importante suivant la puissance de l'organe et/ou de l'équipement, est transportée par un fluide et évacuée vers des sources froides disponibles dans l'aéronef.

Il est connu d'équiper la turbomachine d'un ou de plusieurs systèmes d'échange de chaleur pour réaliser l'échange de chaleur entre le fluide (typiquement de l'huile) et la source froide (air, carburant, etc.). Il existe même différents types de systèmes d'échange de chaleur qui sont par exemple les échangeurs de chaleur carburant/huile généralement connus sous l'acronyme anglais FCOC pour « Fuel Cooled Oil Cooler » et les échangeurs de chaleur air/huile connus sous l'acronyme anglais ACOC pour « Air-Cooled Oil Cooler ».

Les échangeurs de chaleur FCOC ont une double fonction de réchauffement du carburant avant la combustion dans la chambre de combustion de la turbomachine et de refroidissement de l'huile réchauffée par les dissipations thermiques de la turbomachine. Cependant, les échangeurs de chaleur FCOC ne suffisent pas à absorber toutes les dissipations thermiques car la température du carburant est limitée en vue des contraintes de sécurité.

Le complément de refroidissement est obtenu par les échangeurs de chaleur ACOC, en particulier ceux du type surfacique et connus sous l'acronyme SACOC. Les échangeurs de chaleur surfacique sont généralement agencés dans la veine secondaire de la turbomachine et utilisent le flux d'air secondaire pour le refroidissement de l'huile circulant dans la turbomachine. Ces échangeurs de chaleur se présentent sous la forme d'une pièce surfacique métallique permettant le passage d'huile dans des canaux usinés. Le flux d'air secondaire est guidé le long d'ailettes portées par cette pièce surfacique et qui ont pour rôle d'augmenter la surface de contact avec le flux d'air secondaire et d'extraire les calories. Toutefois, les échangeurs de chaleur SACOC ont pour inconvénient de créer des pertes de charge supplémentaires dans la veine secondaire concernée puisqu'ils perturbent l'écoulement d'air ce qui impacte la performance de la turbomachine ainsi que la consommation de carburant spécifique.

Leur performance aérothermique (ratio entre la puissance thermique dissipée et la perte de charge induite du côté du flux d'air secondaire) est faible.

De plus, les besoins en refroidissement du fluide lubrifiant augmentent du fait de l'accroissement des vitesses de rotation et des puissances mises en jeu pour répondre aux tendances de spécification sur les turbomachines.

### Résumé de l'invention

L'objectif de la présente invention est de fournir un échangeur de chaleur permettant d'optimiser ses performances thermiques tout en réduisant les pertes d'énergie mécaniques.

Nous parvenons à cet objectif conformément à l'invention grâce à un échangeur de chaleur pour une turbomachine tel que défini dans la revendication 1 comportant une paroi de support et une première pluralité d'ailettes s'élevant chacune depuis une surface externe de la paroi de support et destinées à être balayées par un premier flux d'air, l'échangeur de chaleur comprenant, en aval de la première pluralité d'ailettes, une deuxième pluralité d'ailettes s'élevant chacune depuis la surface externe de la paroi de support, les première et les deuxième pluralités d'ailettes étant séparées par des moyens de distribution qui sont configurés de manière que le premier flux d'air circule à l'extérieur de la deuxième pluralité d'ailettes et qu'un deuxième flux d'air circulant à l'extérieur de la première pluralité d'ailettes traverse la deuxième pluralité d'ailettes.

Ainsi, cette solution permet d'atteindre l'objectif susmentionné. En particulier, en faisant circuler deux flux d'air distincts sans se croiser, la performance thermique est accrue puisque le deuxième flux d'air remplace le premier flux d'air qui a déjà traversé les premières ailettes. Ce deuxième flux d'air qui circule à l'extérieur de l'échangeur de chaleur est plus frais ce qui augmente le potentiel d'échange thermique. Par ailleurs, le chemin emprunté par chaque flux d'air à travers l'échangeur de chaleur présente une longueur réduite ce qui influe sur la réduction de la traînée induite.
- l'échangeur de chaleur comprend un premier panneau profilé recouvrant les ailettes de la première pluralité d'ailettes et une première paroi profilée qui est reliée, en amont, au premier panneau, la première paroi étant disposée en amont de la première pluralité d'ailettes et étant configurée de manière à guider et ralentir le premier flux d'air entrant dans l'échangeur de chaleur à travers la première pluralité d'ailettes.
- les moyens de distribution comprennent une première rampe agencée en aval de la première pluralité d'ailettes et qui s'élève depuis la surface externe de la paroi de support, en étant inclinée, de manière que le premier flux d'air sortant de la première pluralité d'ailettes soit orienté vers l'extérieur de l'échangeur de chaleur.
- les moyens de distribution comprennent un déflecteur qui comporte une première partie de paroi profilée reliée au première panneau, à l'aval et qui est définie dans un plan sensiblement parallèle au plan de la première rampe, une pluralité de cheminées s'étendant entre la première partie de paroi profilée et la première rampe en étant régulièrement espacées les unes des autres de manière à former des passages pour le premier flux d'air.
- chaque cheminée comprend une première ouverture débouchant sur une surface externe de la première partie de paroi profilée et une deuxième ouverture débouchant d'une part, sur une surface interne de la première rampe et d'autre part, en regard de la deuxième pluralité d'ailettes de manière que le deuxième flux d'air circule dans les cheminées à travers les deuxièmes pluralités d'ailettes.
- l'échangeur de chaleur comprend un deuxième panneau profilé recouvrant les ailettes de la deuxième pluralité d'ailettes et une deuxième paroi profilée qui est reliée, en aval, au deuxième panneau profilé, la deuxième paroi étant disposée en aval de la deuxième pluralité d'ailettes et étant configurée de manière à accélérer le deuxième flux d'air sortant de l'échangeur de chaleur à travers la deuxième pluralité d'ailettes.

L'échangeur de chaleur comprend également l'une ou plusieurs des caractéristiques suivantes, prises seules ou en combinaison :
- la paroi de support s'étend suivant une direction longitudinale L.
- les moyens de distribution sont agencés au moins en partie entre les première et deuxième pluralités d'ailettes suivant le sens de circulation des premier et deuxième flux d'air dans les ailettes.
- le déflecteur comprend une deuxième partie de paroi profilée qui est reliée au deuxième panneau, la deuxième partie de paroi comprenant des orifices traversant dans lesquels débouchent les passages.
- la première partie de paroi comprend une première aile s'étendant dans un plan incliné par rapport à la première partie de paroi et recouvrant au moins en partie la première ouverture de chaque cheminée.
- la deuxième partie de paroi comprend une deuxième aile s'étendant dans un plan incliné par rapport à la deuxième partie de paroi et qui recouvrant au moins en partie les orifices.
- les moyens de distribution comprennent une deuxième rampe agencée en amont de la deuxième pluralité d'ailettes et prolongeant la deuxième ouverture des cheminées.
- les ailettes sont continues et rectilignes chacune suivant une direction longitudinale, ou discontinues et disposées en quinconces, ou sont ondulées.
- l'échangeur de chaleur est réalisé par fabrication additive.
- l'échangeur de chaleur comprend un déflecteur qui comporte des passages externes et des passages internes formés par des cheminées, les conduits internes débouchant d'une part à l'extérieur de l'échangeur de chaleur et d'autre part en amont de la deuxième pluralité d'ailettes, les passages externes agencés entre deux cheminées adjacentes débouchant d'une part en aval des premières ailettes et d'autre part à l'extérieur de l'échangeur de chaleur.
- les cheminées sont agencées entre les première et deuxième ailettes suivant la direction longitudinale.
- la première paroi profilée comprend une première extrémité longitudinale formant avec la paroi de support une entrée d'air présentant une première hauteur radiale et la deuxième paroi profilée comprend une deuxième extrémité longitudinale formant avec la paroi de support une sortie d'air présentant une deuxième hauteur radiale, le rapport entre la première hauteur et la deuxième hauteur étant égal ou supérieur à 0.5.
- le premier panneau profilé s'étend à une distance maximale radiale de la surface externe qui est supérieure à la première hauteur et à la deuxième hauteur respectivement des première et deuxième parois profilées.
- le premier et le deuxième panneaux étant reliés par le déflecteur.
- l'échangeur de chaleur est réalisé par fabrication additive.
- le premier panneau, le deuxième panneau, la première paroi, la deuxième paroi et le déflecteur sont réalisés en une seule pièce.
- les ailettes de la première pluralité d'ailettes sont fixées au premier panneau.
- les ailettes de la deuxième pluralité d'ailettes sont fixées au deuxième panneau.
- les ailettes de la première ou deuxième pluralité d'ailettes sont réalisées en une seule pièce respectivement avec le premier ou le deuxième panneau.
- l'échangeur de chaleur est destiné à être agencé dans une veine secondaire de la turbomachine.
- l'échangeur de chaleur est du type air/fluide et de préférence surfacique.
- le premier et le deuxième flux d'air son identiques.
- le premier et le deuxième flux d'air sont issus du flux d'air secondaire circulant dans la veine secondaire.

L'invention concerne également un module de turbomachine d'axe longitudinal X comprenant un carter annulaire autour de l'axe longitudinal dans lequel circule un flux d'air et un échangeur de chaleur selon l'une quelconque des caractéristiques précédentes et qui est agencé dans le carter annulaire, le carter annulaire comportant une paroi annulaire qui guide au moins en partie le flux d'air et qui présente une ouverture ou un renfoncement dans lequel est installé l'échangeur de chaleur avec les premier et deuxième panneaux profilés, la première paroi étant reliée en amont du premier panneau à une portion de la paroi annulaire et la deuxième paroi étant reliée en aval du deuxième panneau à une portion de la paroi annulaire, le premier et le deuxième panneaux étant reliés par le déflecteur.

L'échangeur de chaleur est enterré dans la paroi du carter annulaire.

L'invention concerne en outre une turbomachine comprenant au moins un échangeur de chaleur présentant l'une quelconque des caractéristiques précédentes et/ou un module de turbomachine tel que susmentionné.

### Brève description des figures

L'invention sera mieux comprise, et d'autres buts, détails, caractéristiques et avantages de celle-ci apparaîtront plus clairement à la lecture de la description explicative détaillée qui va suivre, de modes de réalisation de l'invention donnés à titre d'exemples purement illustratifs et non limitatifs, en référence aux dessins schématiques annexés dans lesquels :
[Fig. 1] La figure 1 est une vue en coupe axiale d'un exemple de turbomachine à laquelle s'applique l'invention;
[Fig. 2] La figure 2 est une vue en perspective d'un système d'échange de chaleur destiné à équiper une turbomachine selon l'invention ;
[Fig. 3] La figure 3 est une vue schématique et en coupe axiale du système d'échange de chaleur selon la figure 2 ;
[Fig. 4] La figure 4 est un autre mode de réalisation d'un système d'échange de chaleur avec des ailettes discontinues et en quinconce s'élevant depuis une paroi de support d'un échangeur de chaleur selon l'invention ;
[Fig. 5] La figure 5 illustre schématiquement et plus en détails une zone de croisement de différents flux d'échange de chaleur, sans mélange de ceux-ci, dans un exemple de système d'échange de chaleur selon l'invention ;
[Fig. 6] La figure 6 est une vue en perspective et de côté d'un exemple de système d'échange de chaleur et en particulier d'un déflecteur selon l'invention ;
[Fig. 7] La figure 7 illustre suivant une coupe axiale, à travers une cheminée, le trajet d'un deuxième flux à travers le système d'échange de chaleur selon l'invention ;
[Fig. 8] La figure 8 est une vue en perspective et arrière d'un système d'échange de chaleur selon l'invention ;
[Fig. 9] La figure 9 illustre suivant une coupe axiale le trajet d'un premier flux à travers le système d'échange de chaleur selon l'invention ; et
[Fig. 10] La figure 10 représente suivant une coupe axiale un autre exemple de système d'échange de chaleur intégrée dans une paroi de turbomachine selon l'invention.

### Description détaillée de l'invention

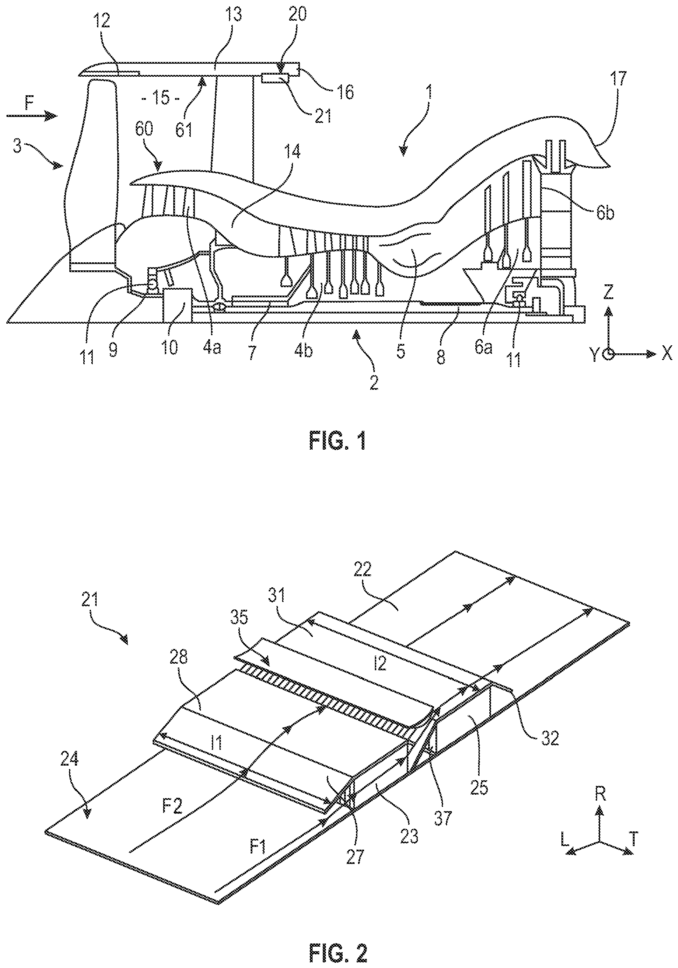

La figure 1 montre une vue en coupe axiale d'une turbomachine d'axe longitudinal X à laquelle s'applique l'invention. La turbomachine représentée est une turbomachine 1 double flux destinée à être montée sur un aéronef. Bien entendu, l'invention n'est pas limitée à ce type de turbomachine.

Cette turbomachine 1 double flux comprend de manière générale un générateur de gaz ou moteur à turbine à gaz 2 en amont duquel est montée une soufflante 3.

Dans la présente invention, les termes « amont » et « aval » sont définis par rapport à la circulation des gaz dans la turbomachine et ici suivant l'axe longitudinal X et en référence à la figure 1 de gauche à droite. De même, une turbomachine se compose généralement de plusieurs modules qui sont fabriqués indépendamment les uns des autres et qui sont assemblés ensuite les uns aux autres de manière à faciliter son assemblage, son démontage ainsi que sa maintenance.

Le générateur de gaz 2 comprend un ensemble de compresseur de gaz (comportant ici un compresseur basse pression 4a et un compresseur haute pression 4b), une chambre de combustion 5 et un ensemble de turbine (comportant ici une turbine haute pression 6a et une turbine basse pression 6b). Classiquement la turbomachine comprend un arbre basse pression 7 qui relie le compresseur basse pression et la turbine basse pression pour former un corps basse pression et un arbre haute pression 8 qui relie le compresseur haute pression et la turbine haute pression pour former un corps haute pression. L'arbre basse pression 7, centré sur l'axe longitudinal, entraîne dans le présent exemple un arbre de soufflante 9. Un réducteur de vitesse 10 peut être interposé, comme ici, entre l'arbre de soufflante 9 et l'arbre basse pression 7. Des paliers de guidage 11 en rotation, en amont et en aval, permettent de guider en rotation l'arbre basse pression 7 par rapport à une structure fixe de la turbomachine.

La soufflante 3 est carénée par un carter de soufflante 12 portée par une nacelle 13 et génère un flux d'air primaire qui circule à travers le générateur de gaz 2 dans une veine primaire 14 et un flux d'air secondaire qui circule dans une veine secondaire 15 autour du générateur de gaz 2. Le flux d'air secondaire est éjecté par une tuyère secondaire 16 terminant la nacelle 13 alors que le flux d'air primaire est éjecté à l'extérieur de la turbomachine via une tuyère d'éjection 17 située en aval du générateur de gaz 2. Dans la suite de la description, le carter de soufflante 12 et la nacelle 13 sont considérés comme une seule et même pièce.

Les paliers de guidage 11 et le réducteur de vitesse 10 dans cet exemple de configuration de la turbomachine doivent être lubrifiés et/ ou refroidis pour assurer la performance de la turbomachine. La puissance générée par ceux-ci est dissipée dans un fluide provenant d'une source d'alimentation en fluide installée dans la turbomachine et qui permet de lubrifier et/ou de refroidir divers organes et/ou équipements de la turbomachine. Bien entendu, d'autres équipements de la turbomachine génèrent beaucoup de chaleur devant être extraite de leur environnement.

A cet effet, la turbomachine comprend un système d'échange de chaleur 20 qui permet de refroidir le fluide destiné à lubrifier et/ou refroidir ces organes et/ou équipements. Dans le présent exemple, le fluide est une huile et la source froide destinée à refroidir l'huile est le flux d'air circulant dans la turbomachine, notamment le flux d'air secondaire. Le système d'échange de chaleur comprend un échangeur de chaleur 21 qui est porté par le carter de soufflante de la turbomachine comme cela est représenté schématiquement sur la figure 1. En particulier, l'échangeur de chaleur 21 est agencé dans la veine secondaire 15 de sorte que celui-ci soit traversé par le flux d'air secondaire. L'échangeur de chaleur est du type surfacique air/huile.

En référence à la figure 2, l'échangeur de chaleur 21 comporte une paroi de support 22 qui s'étend suivant une direction longitudinale L. La paroi de support 22 est ici sensiblement plane. Cette paroi peut ne pas être tout à fait plane mais incurvée pour suivre le profil de la paroi du carter de soufflante 12 qui est destinée à porter l'échangeur de chaleur 21 et qui est sensiblement cylindrique (et centré sur l'axe longitudinal X). L'échangeur de chaleur 21 peut être annulaire et occuper toute la paroi du carter de soufflante 12. De manière alternative, l'échangeur de chaleur 21 est agencé sur une portion du carter de soufflante 12.

L'échangeur de chaleur 21 comprend également une première pluralité d'ailettes 23 qui s'élèvent chacune ici depuis une surface externe 24 de la paroi de support 22. Les ailettes 23 s'étendent suivant une direction radiale R qui est perpendiculaire à la direction longitudinale. Nous utilisons le terme « direction » pour décrire l'échangeur de chaleur 21 en particulier. La direction radiale est parallèle à un axe radial qui s'étend depuis l'axe longitudinal de la turbomachine. La direction longitudinale est parallèle à l'axe longitudinal de la turbomachine en situation d'installation.

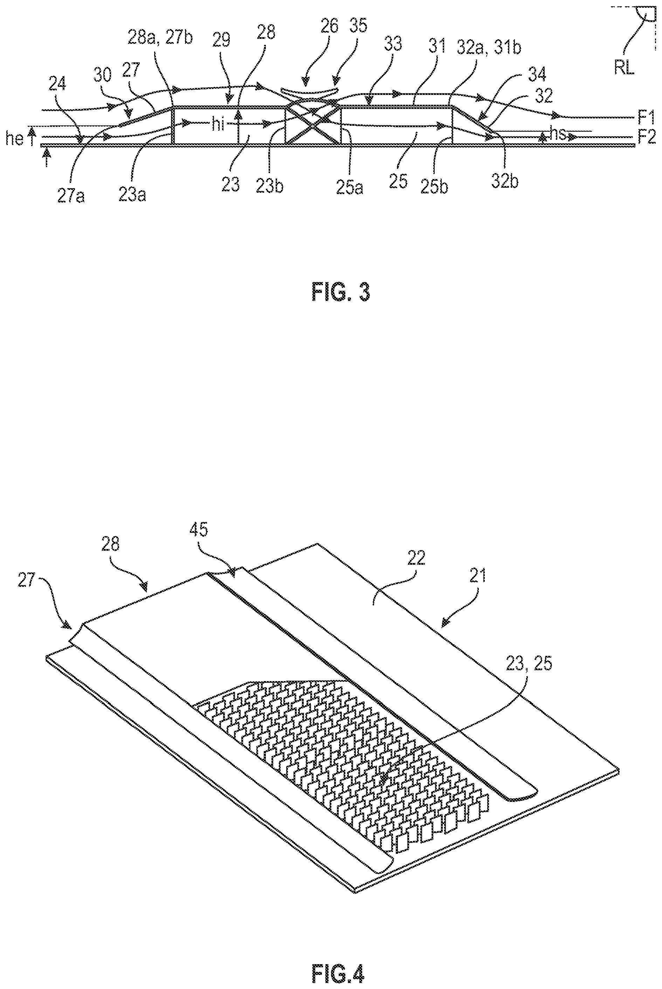

Comme nous pouvons le voir sur les figures 2 et 3, les ailettes 23 sont continues et rectilignes. De manière avantageuse, les ailettes 23 présentent ici une forme rectangulaire. Celles-ci s'étendent chacune suivant la direction longitudinale L (sensiblement parallèle à la circulation ou écoulement du flux d'air dans la turbomachine et notamment dans l'échangeur de chaleur). Plus précisément encore, chaque ailette 23 est plane. Les ailettes 23 sont agencées successivement et régulièrement sur la surface radialement externe 24 suivant une direction transversale T qui est perpendiculaire à la direction longitudinale L et à la direction radiale R. Elles sont encore sensiblement parallèles entre elles. Sur la figure 3, chaque ailette 23 de la première pluralité d'ailettes présente un bord d'attaque 23a et un bord de fuite 23b opposés suivant le sens de circulation du flux d'air.

Comme nous pouvons le voir également sur les figures 2 et 3, l'échangeur de changeur 21 comprend une deuxième pluralité d'ailettes 25 qui s'élèvent chacune ici depuis la surface externe 24 de la paroi de support 22 suivant la direction radiale. Les ailettes 25 sont agencées en aval de la première pluralité d'ailettes 23 (dans le sens de circulation du flux d'air). Comme représenté sur les figures et 3, les ailettes 25 de la première pluralité d'ailettes 23 sont agencées en aval de la première pluralité d'ailettes suivant la direction longitudinale L. Dans le présent exemple, les ailettes 25 de la deuxième pluralité d'ailettes sont similaires aux ailettes 23 de la première pluralité d'ailettes. En d'autres termes, ces ailettes 25 sont ici continues, rectilignes et planes. Elles sont également de forme rectangulaire suivant une section axiale. Les ailettes 25 présentent chacune un bord d'attaque 25a et un bord de fuite 25b.

Sur la figure 4 partiellement écorchée, les ailettes de la première et/ou deuxième pluralité d'ailettes 23, 25 peuvent également être discontinues et placées en quinconce (à pas décalés) suivant la direction radiale ou longitudinale. Les ailettes 23, 25 s'étendent depuis la surface externe 24 de la paroi de support 23 et suivant le sens d'écoulement du flux d'air F1, F2. Il y a des rangées d'ailettes dans le sens de la direction longitudinale et dans le sens de la direction transversale T. Les ailettes disposées de la sorte permettent d'intensifier par interruption et redéveloppement des couches limites thermiques ce qui permet de réduire significativement la surface d'échange pour une puissance dissipée donnée ou bien d'augmenter la puissance pouvant être dissipée dans un encombrement donné. Suivant une autre alternative, les ailettes 23, 25 peuvent également être ondulées suivant la direction radiale ou longitudinale. Suivant encore une autre alternative, les ailettes 23, 25 peuvent présenter une forme trapézoïdale.

Deux flux d'air, désignés premier flux d'air F1 et deuxième flux d'air F2 (cf. figures 2, 3) sont destinés à balayer les ailettes 23 et 25 sans se croiser. Ces premier et deuxième flux d'air F1, F2 sont issus du flux d'air secondaire qui entre dans le carter de soufflante 12 (dans la veine secondaire 15) et qui est divisé en deux. Le premier et le deuxième flux d'air son identiques. Le premier flux d'air F1 et le deuxième flux d'air F2 circulent à l'extérieur de l'échangeur de chaleur 21 et à travers les ailettes 23 ou 25.

A cet effet, les première et les deuxième pluralités d'ailettes 23, 25 sont séparées par des moyens de distribution 26 des premier et deuxième flux d'air F1, F2 qui sont configurés de manière que le premier flux d'air F1 circule à l'extérieur de la deuxième pluralité d'ailettes 25 et que le deuxième flux d'air F2 circulant à l'extérieur de la première pluralité d'ailettes 23 traverse la deuxième pluralité d'ailettes 25.Nous comprenons que les moyens de distribution sont agencés au moins en partie entre les première et deuxième pluralités d'ailettes suivant le sens de circulation des premier et deuxième flux d'air dans les ailettes (ou suivant la direction longitudinale L). Le premier flux d'air F1 est destiné à circuler uniquement à travers les ailettes 23. A l'inverse, le deuxième flux d'air F2 est destiné à circuler uniquement à travers (entre) les ailettes 25. Une telle configuration est compacte et permet un gain axial ainsi que radial.

En particulier, sur les figures 2 et 3, l'échangeur de chaleur 21 comprend une première paroi 27 profilée disposée en amont des ailettes 23 (suivant le sens de circulation du flux d'air le long de la surface externe 24) et qui est configurée de manière orienter et guider le premier flux d'air F1 qui entre dans l'échangeur de chaleur 21, et en particulier les ailettes 23. Cette première paroi 27 est également configurée pour ralentir le flux d'air entrant dans l'échangeur de chaleur. Elle a un profil divergent. La première paroi 27 s'étend sur une largeur l1 au moins égale à la distance sur laquelle sont disposées les ailettes. En particulier, la l1 de la première paroi 27 profilée est supérieure à la largeur sur laquelle sont disposées les ailettes (suivant la direction transversale T).

La première paroi 27 est plane et est définie dans un plan qui est incliné par rapport à la direction longitudinale L. Plus précisément, la première paroi 27 comprend une première extrémité 27a longitudinale, en amont, formant avec la paroi de support 22 une entrée d'air qui présente une première hauteur he prédéterminée suivant la direction radiale. La première hauteur he est inférieure à la hauteur hi radiale des ailettes. La hauteur hi des ailettes est comprise entre 5 mm et 30 mm. La première paroi 27 comprend une deuxième extrémité 27b longitudinale, en aval, qui est reliée au sommet du bord d'attaque 23a de chaque ailette 23. En d'autres termes, la première paroi 27 est inclinée en s'évasant vers l'aval. En particulier, les moyens de distribution comprennent une entrée d'air pour le deuxième flux d'air et une sortie d'air pour le premier flux d'air. L'entrée d'air du moyen de distribution est différente de l'entrée d'air au niveau des premières ailettes.

L'échangeur de chaleur 21 comprend un premier panneau 28 profilé recouvrant les ailettes 23. De la sorte, le premier panneau permet de contrôler l'écoulement du flux d'air à l'intérieur de l'échangeur de chaleur 21 sans risque de dérivation (by-pass) du flux d'air qui traverse l'échangeur de chaleur. Les ailettes 23 sont ainsi agencées radialement entre la paroi de support 22 et le premier panneau 28 profilé. Dans cet exemple de réalisation, le premier panneau 28 est relié à la première paroi 27 et s'étend (vers l'aval) suivant la direction longitudinale L. Le premier panneau 28 présente également une largeur (suivant la direction transversale) identique à celle de la première paroi 27. Tel qu'illustré sur la figure 3, le premier panneau 28 est plan. Cependant, le panneau 28 est sensiblement circulaire ou incurvée (autour de l'axe longitudinal X en situation d'installation dans la turbomachine). En particulier, le panneau 28 comprend un premier bord longitudinal 28a qui rejoint la première extrémité 27b longitudinale de la première paroi 27. Comme cela est illustré, la surface périphérique externe 29 du panneau 28 présente une continuité de surface avec la surface externe 30 de la première paroi 27. Le panneau 28 s'étend à une distance radiale égale ou supérieure à celle des ailettes 23. En d'autres termes, cette distance radiale est supérieure à la première hauteur he de l'entrée d'air de la première paroi 27.

La première paroi 27 et le panneau 28 sont avantageusement réalisées en une seule pièce et par exemple par un procédé de fabrication additive (ou impression 3D) telle qu'un procédé de fusion de laser sur lit de poudre.

Avantageusement, mais non limitativement, les ailettes 23 sont fixées, par exemple par brasure, au panneau 28 et/ou au à la paroi de support 22. Elles sont donc rapportées. Alternativement, les ailettes 23 et la paroi de support 22 sont formés d'une seule pièce (c'est-à-dire venues de matière et monoblocs) et avantageusement par fabrication additive De même, les ailettes 23 et le panneau 28 peuvent être réalisés d'une seule pièce. La fabrication additive est réalisée par exemple dans un sens allant de l'amont vers l'aval de l'échangeur de chaleur. Dans ce cas, pour faciliter la fabrication additive et notamment sans support, le bord d'attaque 23a des ailettes 23 présente un angle d'inclinaison avec la direction radiale.

Bien entendu, l'échangeur de chaleur 21 peut dans son ensemble être fabriqué par une autre méthode de fabrication telle que le forgeage.

Par ailleurs, le fait de disposer le panneau 28 sur les ailettes 23 permet d'améliorer la tenue mécanique de l'échangeur de chaleur 21 et par là même de réduire les épaisseurs des ailettes 23. Or, une réduction d'épaisseur des ailettes 23 permet de réduire également la masse de l'échangeur de chaleur 21.

Comme nous pouvons le voir sur les figures 2 à 4, la deuxième pluralité d'ailettes 25 est recouverte également par un deuxième panneau 31 de sorte à contrôler également l'écoulement du flux d'air à l'intérieur de l'échangeur de chaleur 21 et sans risque de dérivation. Les ailettes 25 sont agencées radialement entre la paroi de support 22 et le deuxième panneau 31 profilé. Comme pour le premier panneau 28, le deuxième panneau 31 s'étend sur une largeur l2 au moins égale à la distance sur laquelle sont disposées les ailettes 25. Le panneau 31 est également plan mais peut être de section radiale circulaire ou incurvée en situation d'installation autour de l'axe longitudinal X. Le deuxième panneau 31 est relié en aval à une deuxième paroi profilé 32. Cette dernière est disposée en aval des ailettes 25 de manière à réduire les phénomènes de recirculation qui interviennent en aval des ailettes. La deuxième paroi 32 profilée est également configurée pour accélérer le flux en sortie de l'échangeur de chaleur 21. Les moyens de distribution relient les premier et deuxième panneaux 28, 31 comme expliqué ci-après.

La deuxième paroi 32 présente sensiblement la même configuration que celle de la première paroi 27. Elle a cependant un profil convergent. La largeur de la deuxième paroi 32 est identique à celle (11) de la première paroi 27 et aussi celle (l2) du deuxième panneau 32 (et largeur supérieure à la largeur sur laquelle sont disposées les ailettes suivant la direction transversale T). La deuxième paroi 32 comprend également une première extrémité 32a reliée au deuxième bord longitudinal 31b du deuxième panneau 31. Le deuxième panneau 31 présente une surface périphérique externe 33 ayant une continuité de surface avec la surface externe 34 de la deuxième paroi 32. Cette dernière comprend une deuxième extrémité 32b, en aval, formant avec la paroi de support 22 une sortie d'air qui présente une deuxième hauteur hs prédéterminée suivant la direction radiale. La deuxième hauteur hs est inférieure à la hauteur hi des ailettes. La première extrémité 32a de la deuxième paroi 32 est reliée aux sommets des bords de fuite 25b des ailettes 25. En d'autres termes, la deuxième paroi 32 est inclinée en s'évasant vers l'amont. La distance radiale des panneaux est égale ou supérieure aux première et deuxième hauteurs he, hs des parois 27, 32. La sortie d'air en aval de la deuxième pluralité d'ailettes pour le deuxième flux d'air est différente de la sortie d'air des moyens de distribution.

Dans le présent exemple de réalisation, le rapport entre la première hauteur he et la deuxième hauteur hs est compris entre 0.5 et 1.

Suivant une alternative non représentée, la première et la deuxième paroi 27, 32 présente chacune une forme sensiblement ondulée ou incurvée dans un plan RL (formé par les directions longitudinale L et radiale R perpendiculaires) perpendiculaire au plan LT de la paroi de support 22.

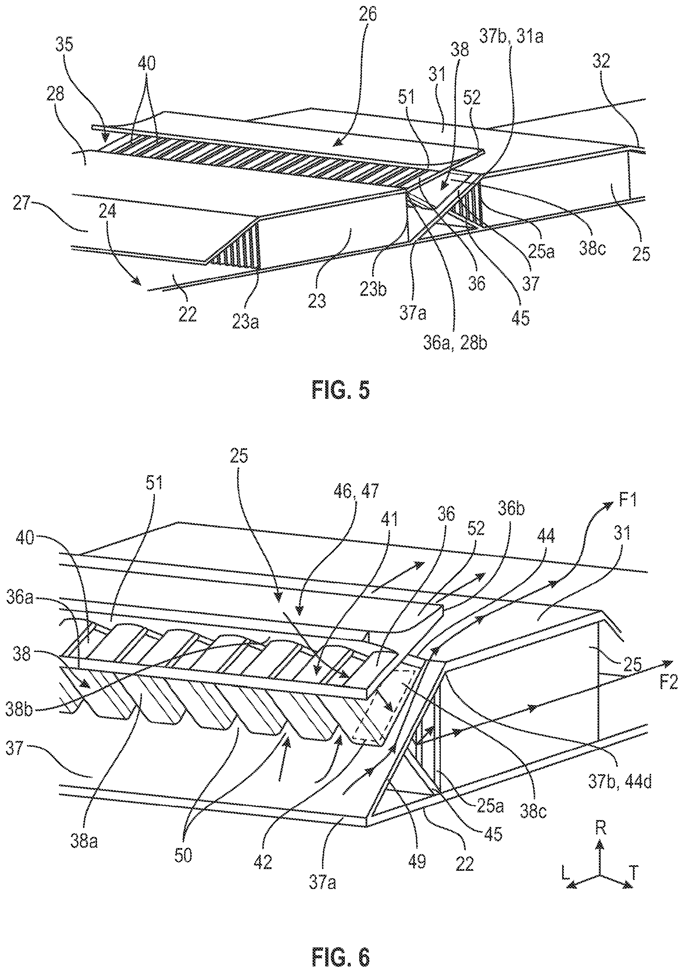

Sur les figures 5 à 9, les moyens de distribution 26, entre les deux pluralités d'ailettes 23, 25, comprennent un déflecteur 35 porté au moins par le premier panneau 28. Ce déflecteur 35 présente une section axiale en forme de X. En particulier, le déflecteur 35 comprend une première partie de paroi 36 profilée avec une extrémité amont 36a qui est reliée au deuxième bord longitudinal 28b du premier panneau 28. La première partie de paroi 36 est inclinée vers l'aval. Dans le présent exemple, la première partie de paroi 36 est définie dans un plan qui est sensiblement parallèle au plan d'une première rampe 37. Le plan de la rampe 37 est incliné suivant un angle compris entre 20 et 70°. La première rampe 37 comprend une première extrémité longitudinale 37a qui est reliée à la paroi de support 22 et une deuxième extrémité longitudinale 37b à un premier bord longitudinal 31a du deuxième panneau 31. La première extrémité longitudinale 37a s'élève, axialement (suivant la direction longitudinale L), en aval des pieds des bords de fuite 23b des ailettes 23, et depuis la surface externe 24 de la paroi de support 22. La deuxième extrémité longitudinale 37b est reliée également aux sommets des bords d'attaque 25a des ailettes 25. En d'autres termes, la première rampe 37 est inclinée vers l'aval. De la sorte, le flux d'air sortant de la première pluralité d'ailettes 23 est orienté à l'extérieur de l'échangeur de chaleur 21 via la première rampe 37.

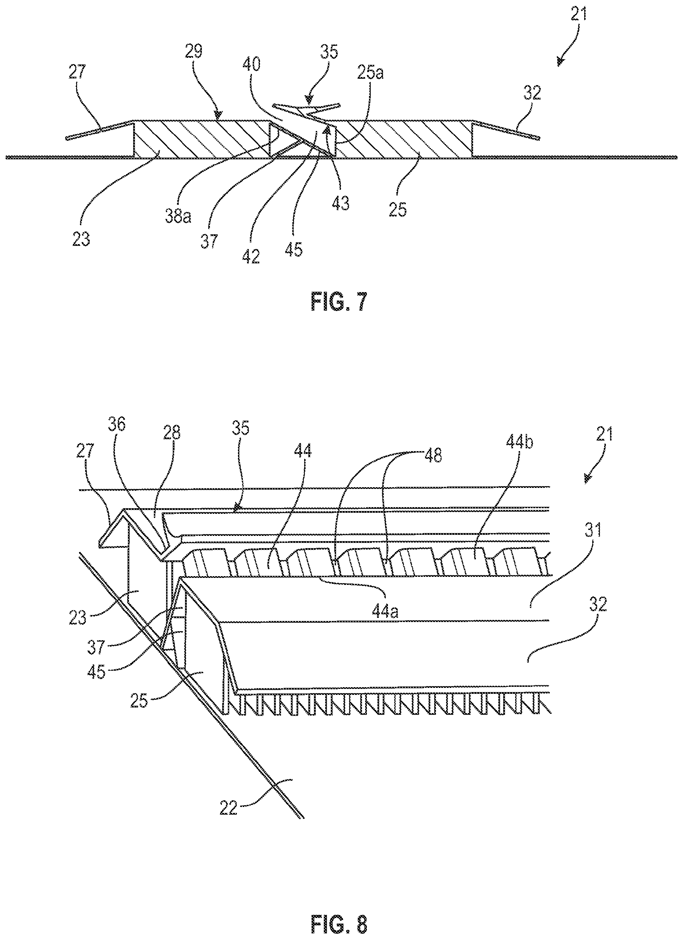

Entre la première partie de paroi 36 et la première rampe 37 s'étendent, sensiblement radialement, une pluralité de cheminées 38. Les cheminées 38 sont régulièrement espacées les unes des autres de manière à former des passages 50 pour le premier flux d'air F1. De la sorte, les flux d'air circulent et sont distribués distinctement dans les moyens de distribution. Le premier flux d'air circule d'une part, entre la première rampe 37 et la première partie de paroi 36 et d'autre part, dans les passages 50 (entre chaque cheminée 38 adjacente suivant la direction transversale T). L'agencement des cheminées dans les moyens de distribution entre les parois de ceux-ci et des première et deuxième pluralités d'ailettes forment des moyens compacts. Chaque cheminée 38 comprend un pan amont 38a et un pan aval 38b qui sont reliés par deux pans latéraux 38c. Les cheminées 38 sont chacune creuses. Chaque cheminée 38 comprend une première ouverture 40 qui est définie dans la première partie de paroi 36 du déflecteur 35. La première ouverture 40 débouche sur une surface externe 41 de la première partie de paroi 36. La première ouverture 40 traverse de part et d'autre la paroi de la première partie de paroi. Chaque cheminée 38 comprend également une deuxième ouverture 42 représentée en pointillée sur la figure 6) qui est définie dans la première rampe 37. Plus précisément, la deuxième ouverture 42 débouche sur une surface interne 43 de la première rampe 37 comme cela est illustré sur la figure 7. Cette surface interne 43 est orientée en regard des bords d'attaque 25a des ailettes 25. La deuxième ouverture 42 traverse la rampe 37 de part et d'autre. Les pans 38a, 38b, 38c délimitent la première ouverture 40 et la deuxième ouverture 42. En d'autres termes, chaque cheminée 38 (formant un conduit interne) est en communication fluidique avec l'extérieur de l'échangeur de chaleur 21 et l'intérieur des ailettes 25. Plus précisément encore, chaque ouverture 40, 42 débouche dans le conduit interne d'une cheminée 38. De la sorte, comme l'illustre la figure 7, le deuxième flux d'air F2 qui circule à l'extérieur de l'échangeur de chaleur en balayant la surface externe 29 du panneau 28, traverse les cheminées 38 par la première ouverture 40, et débouche, via la deuxième ouverture 42,à travers la deuxième pluralité d'ailettes 25.

En référence aux figures 6 et 8, le déflecteur 35 comprend une deuxième partie de paroi 44 qui est définie dans un plan qui est transversal au plan de la première partie de paroi 36. La deuxième partie de paroi 44 est reliée à la première partie 36 au niveau d'une jonction centrale (au centre du X supérieur). La deuxième partie de paroi 44 comprend une deuxième extrémité 44a qui est reliée au premier bord longitudinal du deuxième panneau 31 (ou à proximité du bord longitudinal). De la sorte, le déflecteur 35 est également porté par le deuxième panneau 31.

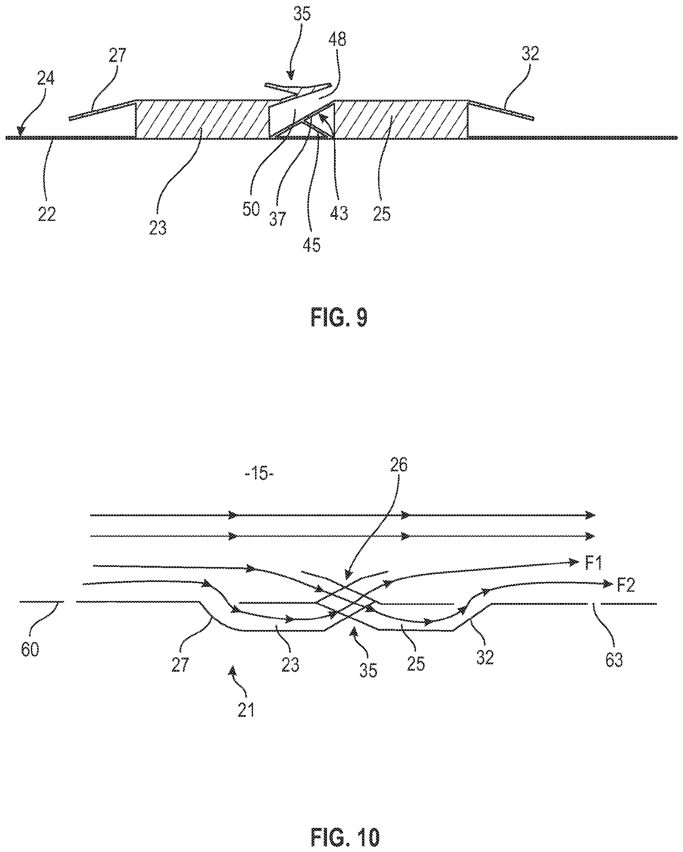

Comme nous pouvons le voir sur la figure 8, la première partie de paroi 44 comprend plusieurs portions 44b qui sont réparties régulièrement suivant la direction transversale T. Le pan amont 38a est défini dans (ou par) chaque portion 44b de la deuxième partie de paroi 44. La deuxième partie de paroi 44 comprend également des orifices 48 qui traversent sa paroi de part et d'autre suivant la direction transversale au plan dans lequel est définie la deuxième partie de paroi 44. Chaque orifice 48 est agencé transversalement entre deux cheminées 38. Plus précisément encore, chaque orifice 48 est disposé en regard et dans le prolongement d'un passage 50 qui est formé entre deux cheminées 38 adjacentes. Cependant, la première ou la dernière cheminée suivant la direction transversale se trouve à distance d'un rebord latéral 49 de la première rampe 37. De même, comme nous pouvons le voir précisément sur la figure 6, la deuxième partie de paroi 44 ne s'étend pas jusqu'au rebord latéral 49. Autrement dit, la deuxième partie de paroi 44 s'étend au droit du pan latéral 38c de la première ou de la deuxième cheminée 38 suivant la direction transversale. De la sorte, comme l'illustre la figure 9, le premier flux d'air F1 qui circule à travers les ailettes 23 débouche sur la rampe 37, traverse le ou les passages 50, et débouche, via les orifices 48, à l'extérieur de l'échangeur de chaleur. Le premier flux d'air peut emprunter le passage 50 le plus proche du rebord latéral 49 et circuler vers l'extérieur de l'échangeur de chaleur.

La première partie de paroi 36 du déflecteur 35 comprend une première aile 51 qui recouvre au moins partiellement la première partie de paroi 36 avec les premières ouvertures 40. L'extrémité libre de la première aile 51 se trouve à distance radialement de la première partie de paroi 36. De même, la deuxième partie de paroi 44 comprend une deuxième aile 52 qui recouvre en partie la deuxième partie de paroi 44 avec les orifices 48. Les première et deuxième ailes s'étendent suivant des directions opposées. La première aile 51 permet de diriger le deuxième flux d'air vers les cheminées 38. La deuxième aile 52 quant à elle permet d'orienter le premier flux d'air à la sortie des orifices 48. L'extrémité libre 36b de la deuxième aile se trouve à distance radialement du deuxième panneau 31. Tel qu'illustré sur la figure 6, la surface externe 46, 47 de la première aile et de la deuxième aile présentent une continuité de surface.

Les moyens de distribution 26 comprennent également une deuxième rampe 45 qui s'étend depuis la surface interne 43 de la première rampe 37 jusqu'aux pieds des ailettes 25. De manière avantageuse, mais non limitativement, la deuxième rampe 45 prolonge en aval les deuxièmes ouvertures 42 de manière à guider le flux d'air vers l'intérieur des ailettes 25.

Les panneaux 28, 31 et le déflecteur 35 peuvent être réalisés en une seule pièce (d'un seul tenant) de manière à simplifier la fabrication et le montage de l'échangeur de chaleur. La fabrication additive est un procédé de fabrication permettant d'atteindre cet objectif. Il peut être prévu que les ailettes 23, 25 soient fabriquées également en une seule pièce avec les panneaux et le déflecteur 35 et suivant le même procédé de fabrication.

Ainsi, le première flux d'air F1 qui entre dans l'échangeur de chaleur 21, balaye la surface externe 24 du support 22, traverse les première ailettes 23, traverse le ou les passage(s) 50 agencés entre les cheminées 38 (ou entre deux pans) et s'évacue vers l'extérieur de l'échangeur de chaleur par le ou les orifice(s) 48. Le premier flux d'air, à la sortie de l'orifice 48, balaie la surface externe du deuxième panneau. Quant au deuxième flux d'air F2 qui circule à l'extérieur de l'échangeur de chaleur 21, celui-ci entre dans l'échangeur de chaleur au niveau des premières ouvertures 40, pénètre à l'intérieur des cheminées 38 puis débouche dans les deuxièmes ailettes 25 par les deuxièmes ouvertures 42. Le deuxième flux d'air quitte ensuite l'échangeur de chaleur par la sortie et en balayant la surface externe 24 de la paroi de support 22. Chaque premier et deuxième flux parcourt un trajet à l'intérieur de l'échangeur de chaleur qui est court ce qui réduit la traînée. En effet, leur chemin respectif est sensiblement identique à celui d'un échangeur classique avec seule une pluralité d'ailettes 23 ou 25.

La figure 10 représente un mode de réalisation d'un échangeur de chaleur enterré dans une paroi annulaire 60, 61 de la turbomachine. Ici la paroi annulaire est celle d'une veine secondaire et guide au moins en partie le flux d'air secondaire. L'échangeur de chaleur 21 dans son agencement est balayé et/ou traversé par le flux d'air secondaire de la turbomachine. La veine secondaire 15 est délimitée par une paroi annulaire radialement interne 60 et une paroi annuaire radialement externe 61. Cette dernière est portée au moins en partie par le carter de soufflante 12. Suivant l'exemple de réalisation, la paroi annulaire 60 comprend une ouverture ou un renfoncement 63 dans laquelle est installé l'échangeur de chaleur 21. En particulier, la première paroi 27 en amont du premier panneau 28 à une portion de la paroi annulaire 60 et la deuxième paroi 32 est reliée en aval du deuxième panneau 31 à une portion de la paroi annulaire. Le premier panneau et le deuxième panneau sont reliés par le déflecteur 35. Les panneaux 28, 31 sont décalés radialement vers l'intérieur de la paroi 60. De la sorte, les ailettes 23, 25 sont ainsi enterrées au moins en partie dans la paroi 60 de la veine secondaire 15 ce qui permet de minimiser la perturbation de l'écoulement du flux d'air dans la veine secondaire. Par ailleurs, comme pour les modes de réalisation précédents, les premier et deuxième flux traversent l'échangeur de chaleur 21 via des passages et des conduits internes du déflecteur 35. Le déflecteur 35 comprenant à cet effet des cheminées s'étendant axialement (ou suivant la direction longitudinale) entre les première et deuxième ailettes 23, 25. Les cheminées adjacentes forment les passages 50 mettant la première pluralité d'ailettes 23 en communication fluidique avec l'extérieur de l'échangeur de chaleur 21 via des orifices 48. Les cheminées forment également les conduits internes en communication fluidique avec la deuxième pluralité d'ailettes 25. Chaque cheminée s'étend entre une partie de paroi de l'échangeur et une rampe en étant régulièrement espacées les unes des autres de manière à former les passages, externes, pour le premier flux d'air. La partie de paroi comprend des premières ouvertures 40 en communication avec l'extérieur de l'échangeur et ici la veine 15 et des deuxièmes ouvertures 42 débouchant en amont des deuxièmes ailettes 25. De la sorte, le premier flux d'air F1 qui circule à travers les ailettes 23 débouche sur la rampe 37, traverse le ou les passages 50, et débouche, via les orifices 48, à l'extérieur de l'échangeur de chaleur (dans la veine secondaire) et le deuxième flux d'air F2 qui circule à l'extérieur de l'échangeur de chaleur (dans la veine secondaire), traverse les cheminées 38 par la première ouverture 40, et débouche, via la deuxième ouverture 42, à travers la deuxième pluralité d'ailettes 25.

## Revendications

1. Echangeur de chaleur (21) pour une turbomachine comportant une paroi de support (22) s'étendant suivant une direction longitudinale L et une première pluralité d'ailettes (23) s'élevant chacune depuis une surface externe (24) de la paroi de support (22) et destinées à être balayées par un premier flux d'air, **caractérisé en ce que** l'échangeur de chaleur comprend, en aval de la première pluralité d'ailettes (23) suivant la direction longitudinale, une deuxième pluralité d'ailettes (25) s'élevant chacune depuis la surface externe (24) de la paroi de support (22), les première et les deuxième pluralités d'ailettes (23, 25) étant séparées au moins en partie par des moyens de distribution (26), suivant la direction longitudinale, qui sont configurés de manière que le premier flux d'air circule à l'extérieur de la deuxième pluralité d'ailettes (25) et qu'un deuxième flux d'air circulant à l'extérieur de la première pluralité d'ailettes traverse la deuxième pluralité d'ailettes (25), l'échangeur comprenant en outre une première paroi (27) profilée qui est disposée en amont de la première pluralité d'ailettes (23) et qui est configurée de manière à guider et ralentir le premier flux d'air entrant dans l'échangeur de chaleur (21) à travers la première pluralité d'ailettes (23), et une deuxième paroi (32) profilée qui est disposée en aval de la deuxième pluralité d'ailettes (25) et qui est configurée de manière à accélérer le deuxième flux d'air sortant de l'échangeur de chaleur à travers la deuxième pluralité d'ailettes (25).

2. Echangeur de chaleur (21) selon la revendication précédente, **caractérisé en ce qu'**il comprend un premier panneau (28) profilé recouvrant les ailettes de la première pluralité d'ailettes (23), la première paroi (27) profilée étant est reliée, en amont, au premier panneau (28).

3. Echangeur de chaleur (21) selon l'une des revendications précédentes, **caractérisé en ce que** les moyens de distribution (26) comprennent une première rampe (37) agencée en aval de la première pluralité d'ailettes (23) et qui s'élève depuis la surface externe (24) de la paroi de support (22), en étant inclinée, de manière que le premier flux d'air sortant de la première pluralité d'ailettes (23) soit orienté vers l'extérieur de l'échangeur de chaleur.

4. Echangeur de chaleur (21) selon la revendication précédente, **caractérisé en ce que** les moyens de distribution (26) comprennent un déflecteur (35) qui comporte une première partie de paroi (36) profilée reliée au première panneau (28), à l'aval et qui est définie dans un plan sensiblement parallèle au plan de la première rampe (37), une pluralité de cheminées (38) s'étendant entre la première partie de paroi (36) profilée et la première rampe (37) en étant régulièrement espacées les unes des autres de manière à former des passages (50) pour le premier flux d'air.

5. Echangeur de chaleur (21) selon la revendication 4, **caractérisé en ce que** chaque cheminée (38) comprend une première ouverture (40) débouchant sur une surface externe (41) de la première partie de paroi (36) profilée et une deuxième ouverture (42) débouchant d'une part, sur une surface interne (43) de la première rampe (37) et d'autre part, en regard de la deuxième pluralité d'ailettes de manière que le deuxième flux d'air circule dans les cheminées à travers les deuxièmes pluralités d'ailettes.

6. Echangeur de chaleur (21) selon l'une quelconque des revendications 1 à 5, **caractérisé en ce qu'**il comprend un deuxième panneau (31) profilé recouvrant les ailettes de la deuxième pluralité d'ailettes (25), la deuxième paroi (32) profilée étant reliée, en aval, au deuxième panneau (31) profilé.

7. Echangeur de chaleur (21) selon la revendication 6 et l'une des revendications 4 et 5, **caractérisé en ce que** le déflecteur (35) comprend une deuxième partie de paroi (44) profilée qui est reliée au deuxième panneau (31), la deuxième partie de paroi (44) comprenant des orifices (48) traversant dans lesquels débouchent les passages (50).

8. Echangeur de chaleur (21) selon la revendication 5 ou selon la revendication 5 avec l'une des revendication 6 à 7, **caractérisé en ce que** la première partie (36) comprend une première aile (51) s'étendant dans un plan incliné par rapport à la première partie de paroi (36) et recouvrant au moins en partie la première ouverture (40) de chaque cheminée (38).

9. Echangeur de chaleur (21) selon l'une des revendications 7 et 8, **caractérisé en ce que** la deuxième partie de paroi (44) comprend une deuxième aile (52) s'étendant dans un plan incliné par rapport à la deuxième partie de paroi (44) et qui recouvrant au moins en partie les orifices (48).

10. Echangeur de chaleur (21) selon l'une quelconque des revendications 5 à 9, **caractérisé en ce que** les moyens de distribution (26) comprennent une deuxième rampe (45) agencée en amont de la deuxième pluralité d'ailettes et prolongeant la deuxième ouverture (42) des cheminées (38).

11. Echangeur de chaleur (21) selon l'une quelconque des revendications précédentes, **caractérisé en ce que** les ailettes (23 ; 25) sont continues et rectilignes chacune suivant une direction longitudinale, ou discontinues et disposées en quinconces, ou sont ondulées.

12. Echangeur de chaleur (21) selon l'une quelconque des revendications précédentes, **caractérisé en ce qu'**il est réalisé par fabrication additive.

13. Module de turbomachine d'axe longitudinal X comprenant un carter (12) annulaire autour de l'axe longitudinal dans lequel circule un flux d'air et un échangeur de chaleur (21) selon l'une quelconque des revendications précédentes et qui est agencé dans le carter (12) annulaire, le carter (12) annulaire comportant une paroi (60, 61) annulaire qui guide au moins en partie le flux d'air et qui présente une ouverture ou un renfoncement (63) dans lequel est installé l'échangeur de chaleur (21) avec les premier et deuxième panneaux (28, 31) profilé, la première paroi (27) étant reliée en amont du premier panneau (28) à une portion de la paroi annulaire et la deuxième paroi (32) étant reliée en aval du deuxième panneau (31) à une portion de la paroi annulaire, le premier panneau et le deuxième panneaux étant reliés par le déflecteur (35).

14. Turbomachine (1) comprenant au moins un échangeur de chaleur (21) de chaleur selon l'une quelconque des revendications 1 à 12 et/ou un module de turbomachine selon la revendication précédente.

## Patentansprüche

1. Wärmetauscher (21) für eine Turbomaschine, umfassend eine Stützwand (22), die sich entlang einer Längsrichtung L erstreckt, und eine erste Vielzahl von Rippen (23), die sich jeweils ausgehend von einer Außenfläche (24) der Stützwand (22) erstrecken und dazu vorgesehen sind, von einem ersten Luftstrom durchzogen zu werden, **dadurch gekennzeichnet, dass** der Wärmetauscher stromabwärts der ersten Vielzahl von Rippen (23) entlang der Längsrichtung eine zweite Vielzahl von Rippen (25) umfasst, die sich jeweils ausgehend von der Außenfläche (24) der Stützwand (22) erstrecken, wobei die erste und die zweite Vielzahl von Rippen (23, 25) zumindest teilweise durch Verteilungsmittel (26) getrennt sind, entlang der Längsrichtung, und so konfiguriert sind, dass der erste Luftstrom auf der Außenseite der zweiten Vielzahl von Rippen (25) zirkuliert und dass ein zweiter Luftstrom, der auf der Außenseite der ersten Vielzahl von Rippen zirkuliert, die zweite Vielzahl von Rippen (25) durchquert, wobei der Tauscher weiter eine erste Profilwand (27) umfasst, die stromaufwärts der ersten Vielzahl von Rippen (23) angeordnet ist und die so konfiguriert ist, dass sie den ersten Luftstrom, der durch die erste Vielzahl von Rippen (23) hindurch in den Wärmetauscher (21) eintritt, führt und verlangsamt, und eine zweite Profilwand (32), die stromabwärts der zweiten Vielzahl von Rippen (25) angeordnet ist und die so konfiguriert ist, dass die den zweiten Luftstrom, der durch die zweite Vielzahl von Rippen (25) hindurch aus dem Wärmetauscher austritt, beschleunigt.

2. Wärmetauscher (21) nach dem vorstehenden Anspruch, **dadurch gekennzeichnet, dass** er eine erste Profilplatte (28) umfasst, die die Rippen der ersten Vielzahl von Rippen bedeckt, wobei die erste Profilwand (27) stromaufwärts mit der ersten Platte (28) verbunden ist.

3. Wärmetauscher (21) nach einem der vorstehenden Ansprüche, **dadurch gekennzeichnet, dass** die Verteilungsmittel (26) eine erste Rampe (37) umfassen, die stromabwärts der ersten Vielzahl von Rippen (23) eingerichtet ist und die sich ausgehend von der Außenfläche (24) der Stützwand (22) erstreckt, indem sie so geneigt ist, dass der erste Luftstrom, der aus der ersten Vielzahl von Rippen (23) austritt, zur Außenseite des Wärmetauschers gerichtet ist.

4. Wärmetauscher (21) nach dem vorstehenden Anspruch, **dadurch gekennzeichnet, dass** die Verteilungsmittel (26) einen Deflektor (35) umfassen, der einen ersten Profilwandteil (36) umfasst, der mit der ersten Platte (28) stromabwärts verbunden ist und der in einer im Wesentlichen zur Ebene der ersten Rampe (37) parallelen Ebene definiert ist, eine Vielzahl von Abzügen (38), die sich zwischen dem ersten Profilwandteil (36) und der ersten Rampe (37) erstrecken, indem sie so gleichmäßig voneinander beabstandet sind, dass sie Durchgänge (50) für den ersten Luftstrom bilden.

5. Wärmetauscher (21) nach Anspruch 4, **dadurch gekennzeichnet, dass** jeder Abzug (38) eine erste Öffnung (40) umfasst, die in eine Außenfläche (41) des ersten Profilwandteils (36) mündet, und eine zweite Öffnung (42), die einerseits in eine Innenfläche (43) der ersten Rampe (37) mündet, und andererseits der zweiten Vielzahl von Rippen so zugewandt ist, dass der zweite Luftstrom in den Abzügen durch die zweiten Vielzahlen von Rippen hindurch zirkuliert.

6. Wärmetauscher (21) nach einem der Ansprüche 1 bis 5, **dadurch gekennzeichnet, dass** er eine zweite Profilplatte (31) umfasst, die die Rippen der zweiten Vielzahl von Rippen (25) bedeckt, wobei die zweite Profilwand (32) stromabwärts mit der zweiten Profilplatte (31) verbunden ist.

7. Wärmetauscher (21) nach Anspruch 6 und einem der Ansprüche 4 und 5, **dadurch gekennzeichnet, dass** der Deflektor (35) einen zweiten Profilwandteil (44) umfasst, der mit der zweiten Platte (31) verbunden ist, wobei der zweite Wandteil (44) durchgehende Aussparungen (48) umfasst, in die die Durchgänge (50) münden.

8. Wärmetauscher (21) nach Anspruch 5 oder nach Anspruch 5 mit einem der Ansprüche 6 bis 7, **dadurch gekennzeichnet, dass** der erste Teil (36) einen ersten Flügel (51) umfasst, der sich in Bezug auf den ersten Wandteil (36) in einer geneigten Ebene erstreckt und zumindest teilweise die erste Öffnung (40) jedes Abzugs (38) bedeckt.

9. Wärmetauscher (21) nach einem der Ansprüche 7 und 8, **dadurch gekennzeichnet, dass** der zweite Wandteil (44) einen zweiten Flügel (52) umfasst, der sich in Bezug auf den zweiten Wandteil (44) in einer geneigten Ebene erstreckt und der zumindest teilweise die Aussparungen (48) bedeckt.

10. Wärmetauscher (21) nach einem der Ansprüche 5 bis 9, **dadurch gekennzeichnet, dass** die Verteilungsmittel (26) eine zweite Rampe (45) umfassen, die stromaufwärts der zweiten Vielzahl von Rippen eingerichtet ist und die zweite Öffnung (42) der Abzüge (38) verlängert.

11. Wärmetauscher (21) nach einem der vorstehenden Ansprüche, **dadurch gekennzeichnet, dass** die Rippen (23; 25) jeweils kontinuierlich und geradlinig entlang einer Längsrichtung, oder diskontinuierlich und versetzt angeordnet sind, oder gewellt sind.

12. Wärmetauscher (21) nach einem der vorstehenden Ansprüche, **dadurch gekennzeichnet, dass** er durch additive Fertigung hergestellt ist.

13. Turbomaschinenmodul mit einer Längsachse X, das ein um die Längsachse ringförmiges Gehäuse (12), in dem ein Luftstrom zirkuliert, und einen Wärmetauscher (21) nach einem der vorstehenden Ansprüche umfasst, der in dem ringförmigen Gehäuse (12) eingerichtet ist, wobei das ringförmige Gehäuse (12) eine ringförmige Wand (60, 61) umfasst, die den Luftstrom zumindest teilweise lenkt und die eine Öffnung oder eine Aussparung (63) aufweist, in der der Wärmetauscher (21) mit der ersten und der zweiten Profilplatte (28, 31) installiert ist, wobei die erste Wand (27) stromaufwärts der ersten Platte (28) mit einem Abschnitt der ringförmigen Wand verbunden ist und die zweite Wand (32) stromabwärts der zweiten Platte (31) mit einem Abschnitt der ringförmigen Wand verbunden ist, wobei die erste Platte und die zweite Platte über den Deflektor (35) miteinander verbunden sind.

14. Turbomaschine (1), die mindestens einen Wärmetauscher (21) nach einem der Ansprüche 1 bis 12 und/oder ein Turbomaschinenmodul nach dem vorstehenden Anspruch umfasst.

## Claims

1. A heat exchanger (21) for a turbomachine comprising a support wall (22) extending in a longitudinal direction L and a first plurality of fins (23) that each rise from an external surface (24) of the support wall (22) and intended to be swept by a first air flow, **characterised in that** the heat exchanger comprises, downstream of the first plurality of fins (23) in the longitudinal direction, a second plurality of fins (25) that each rise from the external surface (24) of the support wall (22), the first and the second plurality of fins (23, 25) being separated at least partly by distribution means (26), in the longitudinal direction, which are configured such that the first air flow circulates outside the second plurality of fins (25) and a second air flow circulating outside the first plurality of fins passes through the second plurality of fins (25), the heat exchanger (21) comprising a first profiled wall (27) which is disposed upstream of the first plurality of fins (23) and which is configured so as to guide and slow down the first air flow entering the heat exchanger (21) through the first plurality of fins (23), and a second profiled wall (32) which is disposed downstream of the second plurality of fins (25) and which is configured so as to accelerate the second air flow exiting the heat exchanger through the second plurality of fins (25).

2. The heat exchanger (21) according to the preceding claim, **characterised in that** it comprises a first profiled panel (28) covering the fins of the first plurality of fins (23), the first profiled wall (27) being connected, upstream, to the first panel (28).

3. The heat exchanger (21) according to any of the preceding claims, **characterised in that** the distribution means (26) comprise a first ramp (37) arranged downstream of the first plurality of fins (23) and which rises from the external surface (24) of the support wall (22), being inclined, so that the first air flow exiting from the first plurality of fins (23) is directed towards the outside of the heat exchanger.

4. The heat exchanger (21) according to the preceding claim, **characterised in that** the distribution means (26) comprise a deflector (35) which comprises a first profiled wall portion (36) connected to the first panel (28), downstream and which is defined in a plane substantially parallel to the plane of the first ramp (37), a plurality of stacks (38) extending between the first profiled wall portion (36) and the first ramp (37) being evenly spaced apart from each other so as to form passages (50) for the first air flow.

5. The heat exchanger (21) according to claim 4, **characterised in that** each stack (38) comprises a first opening (40) which opens onto an external surface (41) of the first profiled wall portion (36) and a second opening (42) which opens, on the one hand, onto an internal surface (43) of the first ramp (37) and, on the other hand, opposite the second plurality of fins so that the second air flow circulates in the stacks through the second plurality of fins.

6. The heat exchanger (21) according to one of claims 1 to 5, **characterised in that** it comprises a second profiled panel (31) covering the fins of the second plurality of fins (25), the second profiled wall (32) being connected, downstream, to the second profiled panel (31).

7. The heat exchanger (21) according to claim 6 and one of claims 4 and 5, **characterised in that** the deflector (35) comprises a second profiled wall portion (44) which is connected to the second panel (31), the second wall portion (44) comprising through orifices (48) into which the passages (50) open.

8. The heat exchanger (21) as claimed in claim 5 or as claimed in claim 5 with one of claims 6 to 7, **characterised in that** the first portion (36) comprises a first flange (51) extending in a plane inclined to the first wall portion (36) and at least partly covering the first opening (40) of each stack (38).

9. The heat exchanger (21) according to any of claims 7 and 8, **characterised in that** the second wall portion (44) comprises a second flange (52) extending in a plane inclined to the second wall portion (44) and which at least partly covers the orifices (48).

10. The heat exchanger (21) according to any one of claims 5 to 9, **characterised in that** the distribution means (26) comprise a second ramp (45) arranged upstream of the second plurality of fins and extending the second opening (42) of the stacks (38).

11. The heat exchanger (21) according to any of the preceding claims, **characterised in that** the fins (23; 25) are continuous and rectilinear each along a longitudinal direction, or discontinuous and disposed in staggered rows, or are corrugated.

12. The heat exchanger (21) according to any of the preceding claims, **characterised in that** it is produced by additive manufacturing.

13. A turbomachine module with a longitudinal axis X, comprising a casing (12) which is annular about the longitudinal axis and through which an air flow circulates, and a heat exchanger (21) according to any of the preceding claims, which is arranged in the annular casing (12), the annular casing (12) comprising an annular wall (60, 61) which guides the air flow at least partly and which has an opening or a recess (63) in which the heat exchanger (21) with the first profiled and second panels (28, 31) is installed, the first wall (27) being connected upstream of the first panel (28) to a segment of the annular wall and the second wall (32) being connected downstream of the second panel (31) to a segment of the annular wall, the first panel and the second panel being connected by the deflector (35).

14. The turbomachine (1) comprising at least one heat exchanger (21) according to any of claims 1 to 12 and/or a turbomachine module according to the preceding claim.
